(19) **Europäisches Patentamt / European Patent Office / Office européen des brevets**

(11) **EP 3 667 883 B1**

(12) **FASCICULE DE BREVET EUROPEEN**

(45) Date de publication et mention de la délivrance du brevet:
**09.06.2021 Bulletin 2021/23**

(51) Int Cl.:
**H02M 1/15** *(2006.01)* **H02J 1/02** *(2006.01)*

(21) Numéro de dépôt: **19215797.2**

(22) Date de dépôt: **12.12.2019**

(54) **DISPOSITIF POUR FILTRER LES MICROCOUPURES DE RESEAUX D'ALIMENTATION DC ET LES EMISSIONS CONDUITES BASSES FREQUENCES EMISES PAR LES EQUIPEMENTS**

VORRICHTUNG ZUM FILTERN DER KURZEN DC-NETZUNTERBRECHUNGEN UND DER LEITUNGSGEBUNDENEN NIEDERFREQUENZEMISSIONEN DER GERÄTE

DEVICE FOR FILTERING THE DISTURBANCES OF DC POWER GRIDS AND LOW FREQUENCY EMISSIONS TRANSMITTED BY THE EQUIPMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2018 FR 1872849**

(43) Date de publication de la demande:
**17.06.2020 Bulletin 2020/25**

(73) Titulaire: **Thales**
**92400 Courbevoie (FR)**

(72) Inventeurs:
• **MONTEZIN, Arnaud**
**19311 BRIVE LA GAILLARDE Cedex (FR)**
• **PELLETIER, Frédéric**
**19311 BRIVE LA GAILLARDE Cedex (FR)**
• **RAYNAL, Olivier**
**19311 BRIVE LA GAILLARDE Cedex (FR)**

(74) Mandataire: **Marks & Clerk France**
**Immeuble "Visium"**
**22, avenue Aristide Briand**
**94117 Arcueil Cedex (FR)**

(56) Documents cités:
**US-A1- 2016 329 805     US-A1- 2017 310 205**

• **PACHECO V M ET AL: "An on line no-break with power factor correction and output voltage stabilization", INTELEC 2002. 24TH. INTERNATIONAL TELECOMMUNICATIONS ENERGY CONFERENCE. MONTREAL, QUEBEC, CANADA, SEPT. 29 - OCT. 3, 2002; [INTELEC. INTERNATIONAL TELECOMMUNICATIONS ENERGY CONFERENCE], NEW YORK, NY : IEEE, US, vol. CONF. 24, 29 septembre 2002 (2002-09-29), pages 438-443, XP010614659, DOI: 10.1109/INTLEC.2002.1048693 ISBN: 978-0-7803-7512-3**
• **JINN-CHANG WU ET AL: "A NEW UPS SCHEME PROVIDES HARMONIC SUPPRESSION AND INPUT POWER FACTOR CORRECTION", IEEE TRANSACTIONS ON INDUSTRIAL ELECTRONICS, IEEE SERVICE CENTER, PISCATAWAY, NJ, USA, vol. 42, no. 6, 1 décembre 1995 (1995-12-01), pages 629-635, XP000557996, ISSN: 0278-0046, DOI: 10.1109/41.475503**

**Description**

L'invention concerne un dispositif et un procédé permettant de maintenir la tension d'alimentation des équipements pendant les microcoupures des réseaux d'alimentation continus DC et de filtrer les harmoniques de courant (usuellement de quelques dizaines d'Hertz jusqu'à 10KHz) sur réseau d'alimentation continu ou alternatif redressé.

Elle s'applique notamment aux équipements radio fonctionnant en modulation d'amplitude (AM) et/ou en évasion de fréquence (EVF).

Les normes pour les réseaux d'alimentation continus DC, telle que la DO160, spécifient des durées de microcoupures acceptables. Pour assurer une continuité de service des équipements pendant les microcoupures de tension du réseau, il est nécessaire de stocker de l'énergie dans des condensateurs ou d'autres éléments de stockage de type pile ou batterie. La quantité d'énergie à stocker est fonction du temps de coupure et de la puissance à maintenir. Pour les coupures de longue durée, le volume et la masse des réserves ont donc généralement des tailles importantes, ce qui devient problématique, notamment pour les applications embarquées et mobiles.

De nombreux procédés connus de l'art antérieur existent pour le stockage de l'énergie et sa restitution en cas de microcoupure.

Dans le cas d'un stockage capacitif, les solutions qui permettent d'élever la tension de charge de la capacité sont les plus compactes, car l'énergie stockée dépend de la tension de charge élevée au carré : $E = \frac{1}{2}.C.V^2$ avec :

E : l'énergie stockée en Joules,

C : la valeur du condensateur en Farad,

V : la tension de charge du condensateur en Volt.

Un autre problème concerne la présence éventuelle d'harmoniques de courant basse fréquence.

Pour les réseaux d'alimentation continus DC ou pour les réseaux alternatifs AC redressé, des normes environnementales, telle que la MIL-STD 461 connue de l'homme du métier, imposent la mise en œuvre de filtres à compatibilité électromagnétique ou CEM pour limiter les harmoniques de courant générées par les équipements sur le réseau d'alimentation DC.

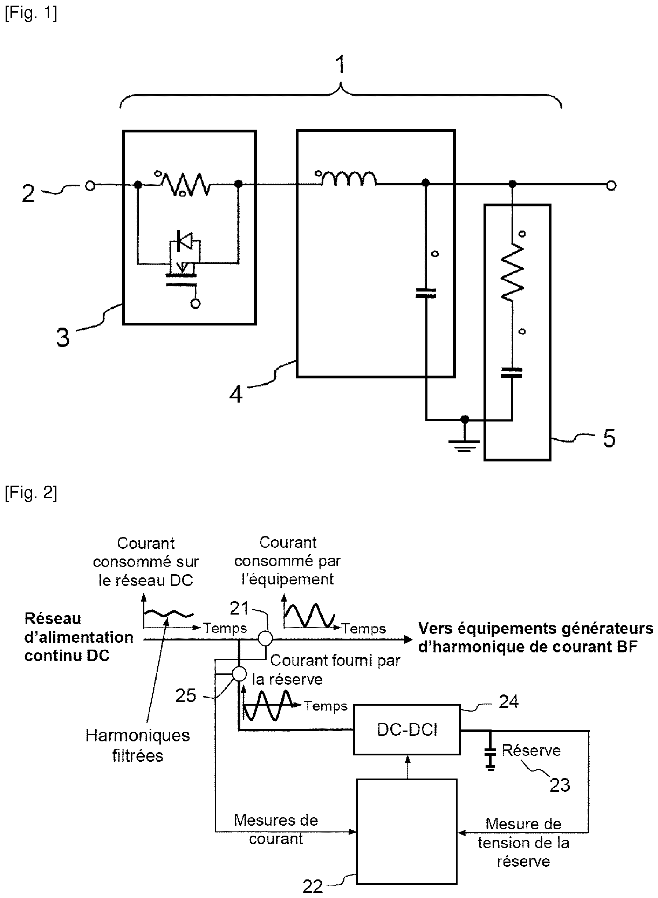

La figure 1 est un exemple de filtre passif conventionnel. Il est d'autant plus volumineux et lourd que les fréquences à filtrer sont basses. Cela représente un handicap majeur pour les applications embarquées et mobiles. Le filtre 1 est positionné sur un réseau d'alimentation continu DC, 2, et comprend une cellule de limitation de courant d'appel 3, suivi d'un filtre LC passe-bas très basse fréquence, 4, et d'une cellule d'amortissement 5. Ce filtre passif est positionné en amont d'un équipement générateur d'harmoniques de courant très basse fréquence.

Pour réduire la taille et la masse du filtre passif dont un exemple est donné à la figure 1, il est généralement remplacé par un filtre actif. Plusieurs solutions de filtre actif peuvent être mises en œuvre (voir figure 2). Elles s'appuient sur un ou plusieurs convertisseurs DC-DC qui, pour compenser les harmoniques de courant générées par les équipements, puisent dans une réserve capacitive. Le brevet US7899415 et le brevet US20130221943 s'appuient sur ce principe.

Le filtre actif de la figure 2 comprend un dispositif 21 permettant de prélever le courant afin d'effectuer des mesures dans le temps. Ces deux mesures de courant sont transmises à un dispositif de régulation et de commande 22 qui prend aussi en compte la mesure de tension de la réserve 23 pour réguler un dispositif 24 bidirectionnel DC-DC ayant pour fonction d'abaisser ou d'élever la valeur de tension aux bornes de la réserve. Le courant fourni par la réserve ou au contraire transmis du réseau vers la réserve circule dans une liaison 25.

A la connaissance du demandeur, aucun des dispositifs connus de l'art antérieur, ne permet de réaliser avec un seul montage, à la fois le filtrage des émissions conduites basses fréquences et la continuité de service pendant les microcoupures. Pour avoir les deux fonctionnalités, il faut mettre en œuvre deux dispositifs distincts : un pour le filtrage des émissions conduites et un pour l'immunité aux microcoupures, ce qui conduit à augmenter la taille du système.

L'invention permet de réaliser à la fois le filtrage des émissions conduites basses fréquences et la continuité de service pendant les microcoupures avec une seule et même architecture système.

L'invention concerne un dispositif de filtrage d'émissions et d'immunité à des microcoupures de courant sur un réseau alimenté en courant, positionné en amont d'un équipement à protéger, le dispositif comportant au moins les éléments suivants :

- Un gestionnaire de conversion de type DC-DC bidirectionnel adapté à fournir une valeur de consigne aux bornes d'une capacité réserve d'énergie,

- Un dispositif de prélèvement du courant circulant dans le réseau, configuré pour transmettre la valeur de courant prélevé à un dispositif de régulation et de contrôle,

- Un dispositif pour prélever une valeur de tension et la transmettre à un dispositif de détection de microcoupures connecté au dispositif de régulation et de contrôle,

- Un moyen apte à éviter un retour de tension dans le réseau d'alimentation,

- Le dispositif de régulation et commande comprend au moins une première boucle d'asservissement de la tension de l'équipement, une deuxième boucle de filtrage des harmoniques de courant et une troisième boucle d'asservissement de la tension de réserve, les sorties des trois boucles sont reliées individuellement à un dispositif de commande ayant pour fonction de générer des signaux à un dispositif de gestion bidirectionnel afin d'abaisser ou d'élever la valeur de la tension prise aux bornes de la réserve d'énergie, afin que cette dernière fournisse de l'énergie au réseau ou au contraire prenne de l'énergie au réseau en se chargeant.

Le dispositif de prélèvement de courant est, par exemple, configuré afin de transmettre ce courant prélevé à un filtre passe-bande adapté à éliminer la composante continue du courant prélevé et borner fréquentiellement la compensation, ledit filtre passe-bande comprenant :

- Un soustracteur configuré pour recevoir la composante alternative restante du courant prélevé et une valeur de courant de référence donnée $I_{ref}$, et adapté à générer un signal d'erreur $S_e$,

- Un module de correction adapté à traiter le signal d'erreur $S_e$ et à générer une valeur de tension $V_{cons}$ correspondante, et à transmettre la valeur de tension d'erreur $V_{cons}$ à un sommateur adapté à pondérer la valeur de tension d'erreur $V_{cons}$, une valeur de tension de référence et une valeur de tension de charge de la réserve d'énergie avant de les transmettre au dispositif de gestion bidirectionnel DC-DC adapté à générer une tension aux bornes de la capacité réserve d'énergie afin que cette dernière fournisse de l'énergie au réseau ou au contraire prenne de l'énergie au réseau en se chargeant.

Le dispositif bidirectionnel DC-DC est, par exemple, configuré pour générer une modulation de largeur d'impulsion pour commander la charge et/ou la décharge de la réserve d'énergie.
Le réseau d'alimentation peut générer une tension continue ou encore une tension alternative redressée.
Le dispositif peut être adapté à filtrer des émissions basses fréquences dans la bande [10Hz, 3KHz].
L'invention concerne aussi un système comportant un dispositif de filtrage d'émissions selon l'invention caractérisé en ce qu'il comporte un équipement radio situé en aval du dispositif de filtrage.
L'objet de l'invention concerne aussi un procédé pour filtrer les émissions conduites au niveau d'un équipement et gérer l'impact des microcoupures en utilisant le dispositif selon l'invention, caractérisé en ce qu'il comporte au moins les étapes suivantes :

- En cas de détection de microcoupures et/ou d'émissions électromagnétiques activer un dispositif de régulation et de contrôle avec les étapes suivantes :

- pour la détection de microcoupures, activer une première boucle d'asservissement en tension,

- pour le filtrage des émissions électromagnétiques, activer une boucle de filtrage des harmoniques de courant et une boucle d'asservissement d'une tension de réserve,

- Afin de générer des commandes à un dispositif bidirectionnel configuré pour abaisser ou élever la valeur de tension aux bornes d'une réserve d'énergie et commander sa charge ou sa décharge dans le réseau d'alimentation.

Le procédé peut comporter les étapes suivantes :

- Prélever une partie du courant circulant dans la ligne d'alimentation,

- Eliminer la composante continue dans la partie du courant prélevé et conserver uniquement la partie alternative sur la plage de fréquence de fonctionnement désiré,

- Comparer la valeur de courant alternatif restant à une valeur de courant de référence et générer un signal d'erreur $S_e$,

- A partir de ce signal d'erreur $S_e$, générer une nouvelle valeur de tension de consigne, pondérer cette valeur de consigne et la « sommer » à une valeur de consigne de charge de la réserve d'énergie et à une valeur de tension de référence, puis générer une nouvelle valeur de consigne à transmettre au dispositif bidirectionnel.

Le procédé est caractérisé en ce que l'on filtre des émissions dans les basses fréquences comprises dans la bande [10Hz, 3KHz].

Le dispositif bidirectionnel génère, par exemple, une modulation d'impulsion pour commander la charge et/ou la décharge de la réserve d'énergie.

Le procédé est caractérisé en ce qu'il filtre les émissions électromagnétiques et évite l'impact de microcoupures de courant en amont d'un dispositif radio.

Les dessins annexés illustrent l'invention :

[Fig.1] représente un exemple de filtre passif conventionnel pour le filtrage d'harmoniques de courant basse fréquence,

[Fig.2] représente un exemple de filtre actif selon l'art antérieur,

[Fig.3] représente un synoptique du dispositif selon l'invention,

[Fig.4A] représente un synoptique du dispositif de régulation et commande dans le cas de microcoupures,

[Fig.4B] représente un synoptique pour la continuité de service lors de microcoupures,

[Fig.5A] représente un synoptique du dispositif de régulation et commande pour le filtrage des émissions conduites basses fréquences,

[Fig.5B] représente un synoptique pour le filtrage des émissions conduites basses fréquences,

[Fig.6] représente les variations de courant et de tension dans le système pendant le filtrage des émissions conduites basses fréquences,

[Fig.7] représente un détail de la partie filtrage des émissions conduites basses fréquences,

[Fig.8] représente dans un diagramme temporel, la variation de la somme des harmoniques de courant filtré.

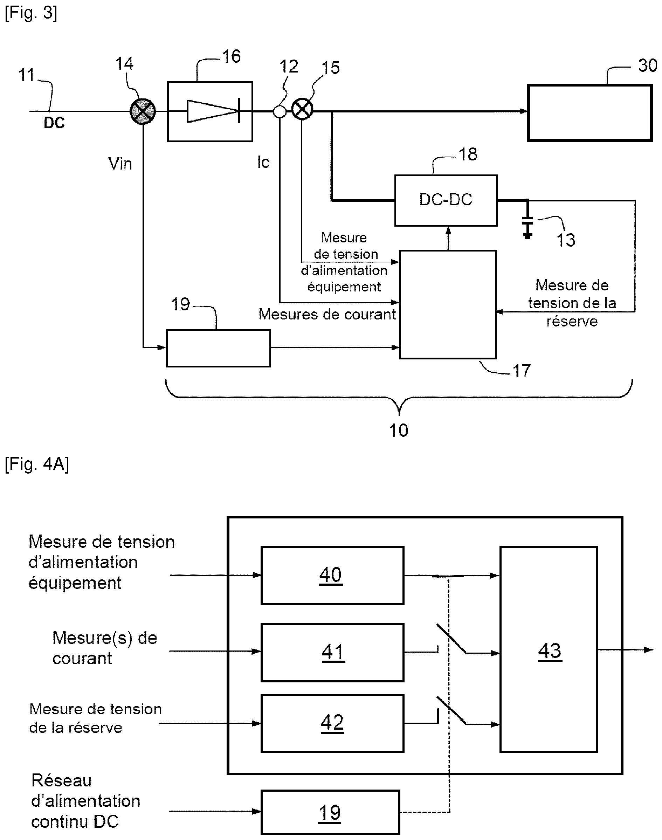

La figure 3 illustre un exemple d'architecture du dispositif selon l'invention. Elle résulte de la mise en commun des convertisseurs et des réserves d'énergie des fonctions de filtrage des émissions conduites basses fréquences et de continuité de service pendant les microcoupures. Les convertisseurs et les réserves d'énergie étant les éléments les plus lourds et volumineux, cela permet donc de réduire considérablement la masse et l'encombrement, presque par deux.

Afin de mieux faire comprendre le dispositif selon l'invention et son fonctionnement, la description qui suit est donnée à titre illustratif et nullement limitatif, pour réguler la tension en amont d'un système radio afin d'éviter l'impact de fonctionnement résultant d'une microcoupure et pour filtrer les émissions basses fréquences CEM sur une ligne d'alimentation (source principale d'alimentation) ayant pour fonction de fournir de la puissance à un système radio. Ceci peut être appliqué pour la protection aux microcoupures et aux émissions de type CEM, de tout autre dispositif équivalent générant ces types d'harmoniques de courant.

La figure 3 illustre un exemple de dispositif de filtrage et régulation de tension 10 selon l'invention positionné en amont d'un système radio 30.

Le dispositif de filtrage d'émissions CEM 10 et de régulation de tension selon l'invention est placé en parallèle d'une ligne alimentation réseau 11 utilisée pour alimenter le système radio 30. Le réseau peut être un réseau de courant continu DC ou un réseau de courant alternatif redressé.

Un premier dispositif de prélèvement de courant 12 connu de l'homme du métier permet de prélever une partie du courant Ic circulant dans la ligne d'alimentation réseau. La partie prélevée $I_c$ de courant va servir notamment à calculer une valeur de consigne à appliquer au niveau d'une réserve d'énergie 13, conduisant à une charge ou une décharge de l'énergie qui permettra de filtrer les émissions et de protéger l'équipement radio vis-à-vis de microcoupures sur la ligne d'alimentation.

Un deuxième dispositif de prélèvement d'une tension 14 (mesure d'une tension du réseau) disposé avant une diode 16 et qui associé au dispositif 19 permet de détecter des coupures de réseau. Un troisième dispositif de prélèvement d'une tension 15, permet d'accéder à la valeur de tension après la diode 16. La valeur du courant après la diode correspond à la valeur de tension d'entrée $V_{in}$ qui sera appliquée à l'entrée d'un convertisseur bidirectionnel DC-DC 18. La diode 16 a notamment pour fonction d'empêcher le retour d'énergie sur le réseau lors d'une microcoupure sur la ligne d'alimentation.

La valeur du courant prélevé et la valeur de tension 15 sont transmises à un dispositif de commande et régulation de tension 17 détaillé aux figures suivantes. Le dispositif de régulation et de commande 17 reçoit sur une entrée un signal issu d'un dispositif de détection de microcoupures 19, une mesure de tension d'alimentation 15, une mesure de courant prélevé 12 et une mesure de la tension prise aux bornes de la réserve d'énergie 13. La sortie du dispositif de régulation et commande est reliée à la sortie du convertisseur DC-DC bidirectionnel 18 ayant pour fonction de réguler la tension aux bornes de la réserve d'énergie 13. Le convertisseur DC-DC bidirectionnel va commander la charge et/ou la décharge de la réserve d'énergie pour réguler la tension avant le système radio et/ou pour éviter l'impact des émissions conduites basses fréquences (filtrage des émissions).

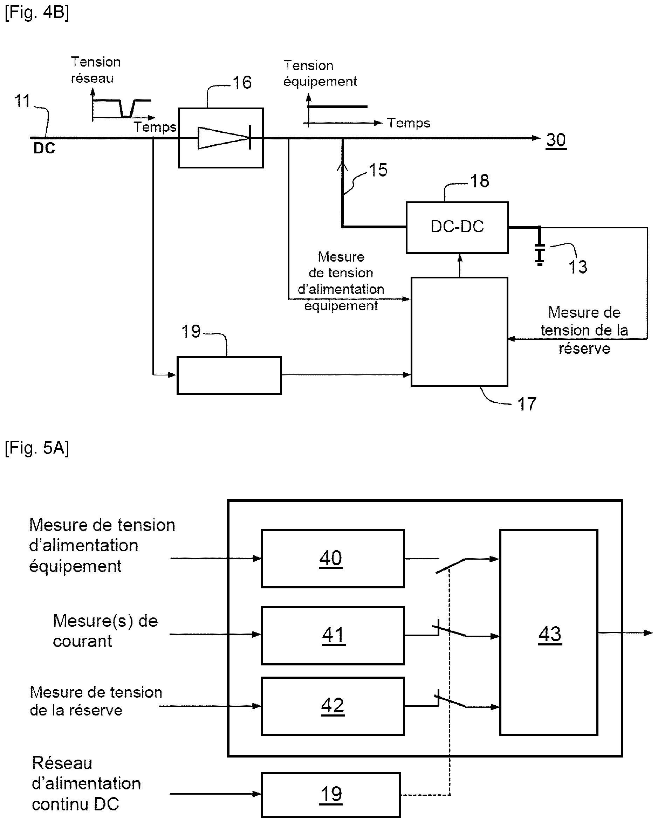

Le dispositif de régulation et commandes 17 (figure 4A, 5A) comprend une première boucle d'asservissement de la tension de l'équipement 40, une deuxième boucle de filtrage des harmoniques de courant 41 et une troisième boucle d'asservissement et de régulation 42 de la tension de réserve. Les sorties des trois boucles sont reliées individuellement à un dispositif de commande 43 ayant pour fonction de générer des signaux de commandes des interrupteurs du convertisseur bidirectionnel afin de faire varier la tension aux bornes de la réserve d'énergie. La première boucle reçoit la valeur de la mesure de tension d'alimentation de l'équipement, la deuxième boucle reçoit la valeur de mesure du courant prélevé et la troisième boucle reçoit la valeur de la mesure de tension de réserve.

Les descriptions détaillées et la réalisation des fonctions de filtrages des microcoupures et des harmoniques sont données dans la suite de la description.

Les figures 4A et 4B illustrent les modules mis en œuvre dans le cas d'une détection de microcoupures sur le réseau d'alimentation par le dispositif de détection 19.

En cas de microcoupure sur le réseau d'alimentation continu DC, figure 4A, figure 4B, seule la première boucle d'asservissement 40 de la tension de l'équipement est activée, la sortie de la deuxième boucle de régulation 41 et la sortie de la troisième boucle de régulation 42 étant déconnectées du dispositif de commande 43. La boucle d'asservissement de la tension est connectée grâce au signal de détection de microcoupures comme il est explicité ci-après. Ceci va ainsi permettre la continuité de service pendant les microcoupures.

Sur la figure 4B, on décrit le maintien de la continuité de service pendant les microcoupures. Elle met en œuvre une réserve capacitive 13. La charge et décharge de la réserve sont gérées par le convertisseur bidirectionnel DC-DC 18.

Il permet de contrôler le courant de charge de la réserve puisé sur le réseau d'alimentation DC. Une fois la réserve chargée, le convertisseur bidirectionnel DC-DC permet d'ajuster la tension de la réserve d'énergie. Le choix de la tension et de la capacité est ajusté de manière à avoir le meilleur compromis énergie stockée ($E=\frac{1}{2}.C.V^2$) par unité de volume.

Tant qu'il n'y a pas de microcoupure, le convertisseur bidirectionnel maintient la tension de la réserve d'énergie.

Lorsque le dispositif de détection de microcoupure détecte une interruption du réseau, le convertisseur bidirectionnel DC-DC utilise l'énergie stockée Es dans la réserve d'énergie 13 pour maintenir la tension $V_{in}$ d'alimentation de l'équipement. Le bloc « Régulations et commande » est celui décrit à la figure 4A.

Les microcoupures sont assimilables à des courts circuits à 0V du réseau d'alimentation continu DC en entrée des équipements. Pour aiguiller l'énergie stockée dans la réserve d'énergie vers l'équipement et éviter de la renvoyer vers le réseau, la fonction anti-retour est assurée par la diode 16, une diode idéale ou un convertisseur unidirectionnel en courant ou tout autre dispositif équivalent.

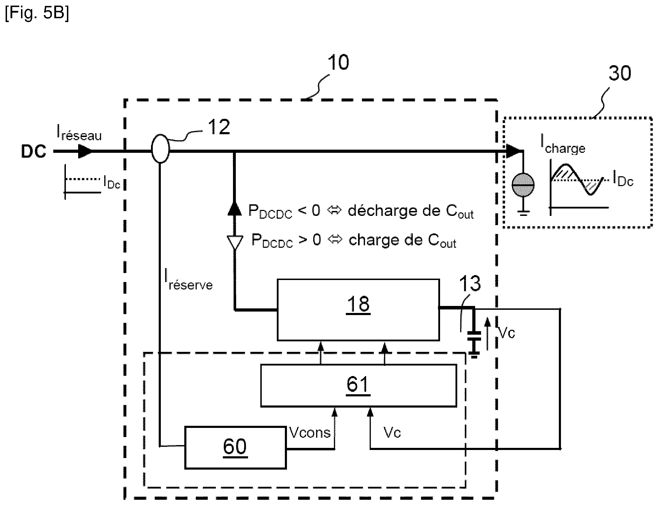

Les figures 5A et 5B illustrent le fonctionnement du système, notamment des trois boucles de régulation, pour filtrer des conduites basses fréquences ou harmoniques de courant basse fréquence.

Sur la figure 5A, la deuxième boucle de filtrage des harmoniques de courant et la troisième boucle d'asservissement de la tension de la réserve sont activées simultanément, i.e., ont leurs sorties reliées au dispositif de régulation et commande. Ce dernier va générer les signaux de commande qui vont permettre de réguler la tension aux bornes de la réserve d'énergie afin de filtrer les émissions électromagnétiques. La fonction de filtrage des harmoniques de courant basse fréquence est activée par défaut en régime établi.

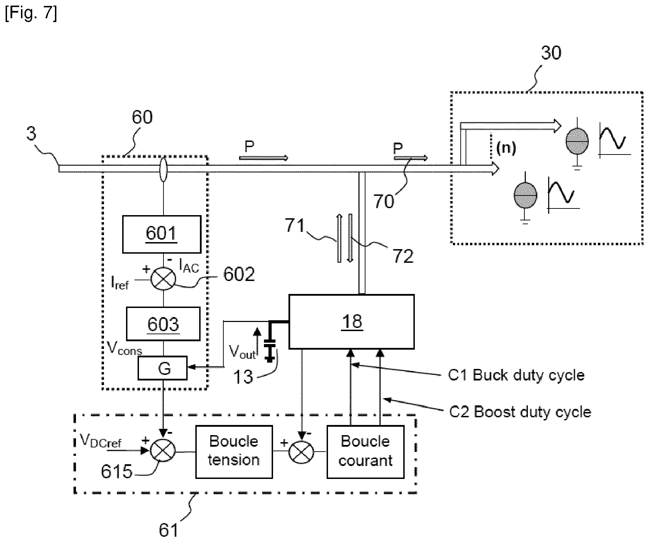

La figure 5B illustre la fonction de filtrage des harmoniques de courant basse fréquence. La mesure du courant prélevé est transmise à une partie du dispositif de régulation et commande qui comprend un module de correction 60 et un module de gestion de puissance 61 qui seront détaillées à la figure 7. Le sens de circulation du courant $I_{réserve}$ indique la charge ou la décharge de la réserve en énergie.

La partie de courant prélevée sert à calculer la valeur de consigne à appliquer aux bornes de la réserve d'énergie, conduisant à une charge ou à une décharge de l'énergie qui permettra de filtrer d'éventuelles émissions conduites basses fréquences ou harmoniques basse fréquence.

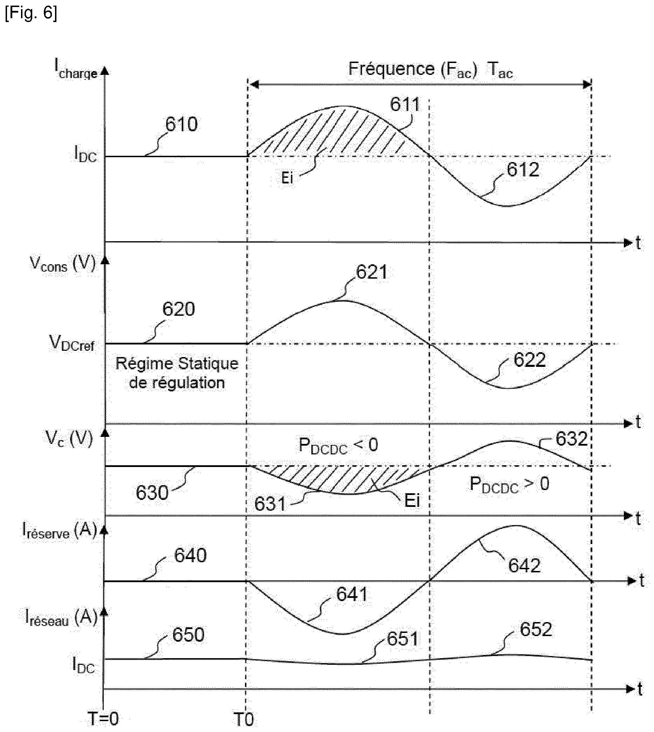

La figure 6 illustre de manière plus détaillée, la variation du courant continu IDC dans la ligne d'alimentation, de la variation de la tension de référence $V_{Cons}(V)$, de la variation de la tension aux bornes de la réserve d'énergie $V_C(V)$, de la variation du courant en entrée de la réserve d'énergie $I_{réserve}(A)$ et de la variation du courant $I(A)$ obtenu par la mise en œuvre du procédé selon l'invention.

L'exemple est donné sur une période temps $T_{AC}$ correspondant à la fréquence $F_{AC}$ du courant alternatif, $F_{AC}$ =1/$T_{AC}$.

Sur la période T= 0 à T0, la ligne d'alimentation n'est pas sollicitée par des variations de courant, les courbes de ces différentes valeurs ne varient pas. La tension de référence $V_{Cons}$(V) correspond à $V_{DCref}$.

Lors de la première demi-période, les alimentations des dispositifs situés en aval de la source de tension génèrent un appel de courant transitoire, 611, par rapport au courant initiale 610, et étant l'énergie fluctuante à compenser. La valeur de la tension calculée $V_{cons}$(V) et transmise au DC-DC bidirectionnel a pour effet technique de simuler une surcharge de la réserve d'énergie, passage d'une valeur initiale 620 à la variation 621. La variation de la tension aux bornes de la réserve d'énergie $V_c$(V) est négative, à partir d'une valeur initiale 630; la réserve d'énergie va se décharger dans le réseau, restituant ainsi de la puissance 631 sur le réseau afin de compenser l'appel de courant. Le courant en entrée $I_{réserve}$(A) de la réserve d'énergie suit la même variation 641. Par contre, le courant du réseau $I_{réseau}$(A) est pratiquement stable 650, 651, par l'effet de décharge d'énergie, le courant ne subit pas ou peu l'appel de courant transitoire.

Lors de la deuxième demi-période, en cas d'une sous-consommation des alimentations disposées en aval d'un équipement à alimenter, il est nécessaire d'absorber le surplus d'énergie, 612.

Dans ce cas la valeur de la tension calculée et transmise au DC-DC bidirectionnel a pour effet technique de simuler une sous-charge de la réserve d'énergie, 622. La variation de la tension aux bornes de la réserve d'énergie est positive ; la réserve d'énergie va se charger en puisant de la puissance restituée par le réseau d'alimentation, 632. Le courant en entrée de la réserve d'énergie suit la même variation 642. Du fait que la réserve d'énergie se charge du surplus de puissance, le courant du réseau reste quasiment stable, 652.

La figure 7 est un synoptique détaillé de la partie filtrage des harmoniques. Le dispositif de filtrage d'émission selon l'invention comprend un filtre passe-bande 601 qui reçoit le courant prélevé $I_c$ de la ligne de puissance. Le filtre passe-bande 601 a notamment pour fonction de supprimer la composante continue DC du courant prélevé et de borner fréquentiellement la plage de fonctionnement du dispositif. La composante AC du courant restante $I_{AC}$ est transmise à un soustracteur 602 qui reçoit une valeur de courant de consigne $I_{Ref}$. En pratique, la valeur du courant de consigne est fixée à la valeur zéro.

Le soustracteur 602 génère un signal d'erreur Se associé à la valeur de courant. Le signal d'erreur est transmis à un module de correction 603 configuré pour générer une valeur de tension $V_{cons}$ correspondante.

Ce module de correction est a minima de type Proportionnel, c'est-à-dire :

P = Proportionnel : le module amène un gain pour adapter une consigne en courant vers une consigne en tension et participer à la rapidité de la correction, selon un principe connu de l'homme du métier,

Le réglage du module de correction est réalisé afin d'assurer un rejet de perturbation aux fréquences supérieures à celles concernées par le filtre actif.

La valeur de tension $V_{cons}$ est transmise à un bloc gain G qui reçoit aussi le prélèvement de la tension de la capacité de réserve $V_{out}$. La sortie du bloc gain est transmise à un sommateur 615 qui reçoit aussi une valeur de tension de référence $V_{DCref}$ (pour le régime statique, elle correspond à la consigne de tension moyenne de la réserve $V_c$.).

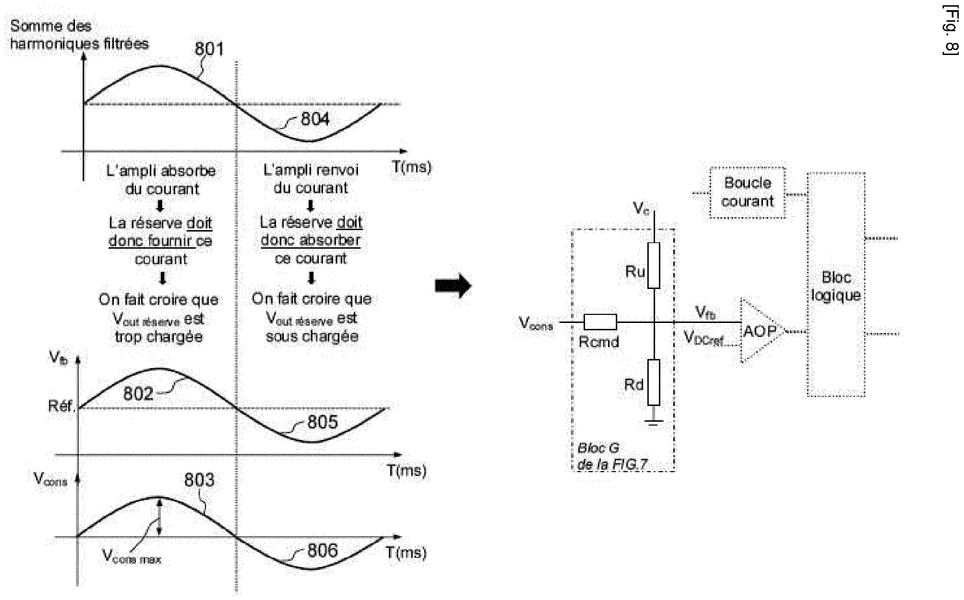

Au niveau de ce sommateur 615, les trois valeurs $V_{cons}$, $V_{DCref}$ et $V_c$ sont pondérées avant d'être sommées, comme il est illustré en référence à la figure 8 explicitée plus loin.

Le calcul de cette pondération s'effectue comme suit :

Expression de l'ondulation de tension maximale nécessaire à appliquer sur $V_c$

[Math. 1]

$$E = <P>* t = \frac{<V_{réseau} \times I_{AC}>}{F_{AC}} = \frac{1}{2} * C_{out} * V_c^2$$

E = énergie (en Joule),

<P> = Puissance moyenne (en Watt),

t = le temps (en seconde)

$V_{réseau}$ = tension moyenne sur le réseau d'entrée,

$I_{AC}$ = amplitude maximale du courant modulé que l'on souhaite filtrer,

$F_{AC}$ = fréquence de(s) harmonique(s) de ce courant $I_{AC}$. Pour le calcul de (Ru, Rcmd) il faut considérer la fréquence minimale à filtrer,

$C_{out}$ = volume capacitif de réserve énergie,

[Math. 2]

$$Vc = k \frac{1}{F_{AC}\sqrt{2C_{out}}} * \sqrt{I_{AC} * V_{reseau}}$$

$k$ une valeur égale à +/- 1 en fonction du sens de l'alternance du courant $I_{AC}$ prélevé.

Bien que le réseau fluctue au passage d'un courant modulé, on considère ce dernier constant à sa valeur nominale dans l'équation précédente permettant d'obtenir une fonction :

[Math. 3]

$$\Delta Vc = f(I_{AC})$$

[Math. 4]

$$I_{AC} = \text{amplitude maximale du courant modulé que l'on souhaite filtrer.}$$

Ceci est illustré à la figure 8 qui illustre dans un diagramme temporel, la variation de la somme des harmoniques de courant filtré.

Dans la première demi-période 801, la boucle de tension absorbe du courant, la réserve d'énergie va fournir ce courant. Pour cela, le gestionnaire de puissance lui fait croire en appliquant une valeur de consigne calculée, que la tension de sortie est trop chargée, 803. A la demi-période suivante, la boucle de tension va retourner du courant et la réserve d'énergie va devoir absorber ce courant, 804. Dans ce cas, le gestionnaire de puissance va faire croire à la réserve d'énergie que sa tension de sortie est trop chargée 805 en appliquant une valeur de consigne appropriée 806.

Pour le calcul des valeurs de résistances, figure 8, on applique le théorème de MILLMAN, on obtient:

[Math. 5]

$$Rd = choix\ arbitraire$$

$$R_u = Rd * (\frac{Vc_{statique}}{V_{DCref}} - 1 - \frac{Gain * \Delta Vc}{V_{cc\_max}})$$

[Math. 6]

$$R_{cmd} = \frac{R_u * V_{cc\_max}}{Gain * \Delta Vc}$$

$V_{DCref}$ = tension de référence du bloc voltage loop,

$\Delta Vc$ = Ondulation de la tension de réserve énergie correspondant à l'énergie qu'il faut absorber ou fournir du réseau pour filtrer le courant $I_{AC}$,

$Vc_{statique}$ = tension moyenne de charge de la réserve énergie souhaité quand il n'y a pas de courant modulé,

*Gain* = Gain statique apporté par toute la chaîne de correction (Mesure courant, Correcteur, filtre passe bande),

$V_{cc\_max}$ = tension d'alimentation de l'électronique constituant les blocs de mesure de courant, de filtre passe bande et de correcteur,

La valeur de consigne $V_{cons}$ est transmise au gestionnaire de composant 17 adapté à déterminer, à partir de la nouvelle valeur de consigne, les nouveaux ordres de commandes, une commande $C_1$ de rapport cyclique de la cellule Buck et une commande $C_2$ de rapport cyclique de la cellule Boost, ces expressions étant connues de l'homme du métier (usuellement par Modulation de Largeur d'Impulsion) du DC-DC bidirectionnel 18 afin d'orienter dans un sens ou l'autre le transfert d'énergie de la réserve d'énergie vers le réseau d'alimentation ou bien du réseau vers la réserve d'énergie, ainsi que son amplitude (ordre de commande, adaptation de niveaux, signaux modulation, horloge,..). Une ligne de transmission d'énergie 70 permettra la circulation de l'énergie, correspondant à la charge ou la décharge de la réserve d'énergie.

Le sens de variation de la charge lors de la mise en œuvre du procédé selon l'invention est illustré à la figure 7. La flèche 71 indique que le transfert de puissance va se faire de la réserve de capacité vers le circuit d'alimentation, via la ligne de puissance 70, lorsque le circuit d'alimentation est en surconsommation d'énergie, par exemple, lors du démarrage d'un dispositif à alimenter. La flèche 72 illustre, au contraire, une restitution de la puissance (énergie) qui se trouve en trop dans le circuit d'alimentation à un moment donné.

Les étapes et les modules décrits précédemment peuvent être utilisés dans tout système où l'on cherche à compenser des variations importantes de courant.

Le procédé et le dispositif selon l'invention offrent une fonction de filtrage CEM des émissions conduites basses fréquences et une fonction d'immunité aux microcoupures dans une même architecture, conduisant à un encombrement et une masse réduits par rapport aux dispositifs connus de l'art antérieur.

Le dispositif est dimensionné en fonction des harmoniques de courant à filtrer et de la puissance à restituer. La solution ne nécessite pas d'utilisation d'inductance de filtrage de taille importante, mais uniquement un stockage capacitif.

Le dispositif selon l'invention peut s'adapter à tout contrôleur PWM standard pour dispositif DC-DC bidirectionnel.

**Revendications**

**1.** Dispositif (10) de filtrage d'émissions et d'immunité à des microcoupures de courant sur un réseau alimenté en courant, positionné en amont d'un équipement (30) à protéger, le dispositif comportant au moins les éléments suivants :

Un gestionnaire de conversion de type DC-DC bidirectionnel (18) adapté à fournir une valeur de consigne aux bornes d'une capacité réserve d'énergie (13),
Un dispositif de prélèvement du courant (12) circulant dans le réseau, configuré pour transmettre la valeur de courant prélevé à un dispositif de régulation et de contrôle (17),
Un dispositif (14) pour prélever une valeur de tension et la transmettre à un dispositif de détection de microcoupures (19) connecté au dispositif de régulation et de contrôle (17),
Un moyen (16) apte à éviter un retour de tension dans le réseau d'alimentation,
Le dispositif de régulation et commande (17) comprend au moins une première boucle d'asservissement de la tension de l'équipement (40), une deuxième boucle de filtrage des harmoniques de courant (41) et une troisième boucle d'asservissement (42) de la tension de réserve, les sorties des trois boucles sont reliées individuellement à un dispositif de commande (43) ayant pour fonction de générer des signaux à un dispositif de gestion bidirectionnel (18) afin d'abaisser ou d'élever la valeur de la tension prise aux bornes de la réserve d'énergie, afin que cette dernière fournisse de l'énergie au réseau ou au contraire prenne de l'énergie au réseau en se chargeant, **caractérisé en ce que**
le dispositif de prélèvement de courant (12) est configuré afin de transmettre ce courant prélevé à un filtre passe-bande (601) adapté à éliminer la composante continue du courant prélevé et borner fréquentiellement la compensation, ledit filtre passe-bande comprenant :

Un soustracteur (602) configuré pour recevoir la composante alternative restante du courant prélevé et une valeur de courant de référence donnée $I_{ref}$, et adapté à générer un signal d'erreur $S_e$,
Un module de correction (603) adapté à traiter le signal d'erreur $S_e$ et à générer une valeur de tension $V_{cons}$ correspondante, et à transmettre la valeur de tension d'erreur $V_{cons}$ à un sommateur (615) adapté à pondérer la valeur de tension d'erreur $V_{cons}$, une valeur de tension de référence et une valeur de tension de charge de la réserve d'énergie avant de les transmettre au dispositif de gestion bidirectionnel DC-DC (18) adapté à générer une tension aux bornes de la capacité réserve d'énergie afin que cette dernière fournisse de l'énergie au réseau ou au contraire prenne de l'énergie au réseau en se chargeant.

2. Dispositif selon la revendication 1 **caractérisé en ce que** le dispositif bidirectionnel DC-DC (18) est configuré pour générer une modulation de largeur d'impulsion pour commander la charge et/ou la décharge de la réserve d'énergie.

3. Dispositif selon la revendication 1 **caractérisé en ce que** le réseau d'alimentation génère une tension continue.

4. Dispositif selon la revendication 1 **caractérisé en ce que** le réseau d'alimentation est adapté à générer une tension alternative redressée.

5. Dispositif selon l'une des revendications 1 à 4 **caractérisé en ce qu'**il est adapté à filtrer des émissions basses fréquences dans la bande [10Hz, 3KHz].

6. Système comportant un dispositif de filtrage d'émissions selon l'une des revendications 1 à 5 **caractérisé en ce qu'**il comporte un équipement radio (30) situé en aval du dispositif de filtrage (10).

7. Procédé pour filtrer les émissions conduites au niveau d'un équipement et gérer l'impact des microcoupures en utilisant le dispositif selon l'une des revendications 1 à 5, **caractérisé en ce qu'**il comporte au moins les étapes suivantes :

En cas de détection de microcoupures et/ou d'émissions électromagnétiques activer un dispositif de régulation et de contrôle avec les étapes suivantes :

- pour la détection de microcoupures, activer une première boucle d'asservissement en tension, (40),
- pour le filtrage des émissions électromagnétiques, activer une boucle de filtrage des harmoniques de courant (41) et une boucle d'asservissement (42) d'une tension de réserve,

Afin de générer des commandes à un dispositif bidirectionnel (18) configuré pour abaisser ou élever la valeur de tension aux bornes d'une réserve d'énergie (13) et commander sa charge ou sa décharge dans le réseau d'alimentation.

8. Procédé selon la revendication 7 **caractérisé en ce qu'**il comporte les étapes suivantes :

Prélever une partie du courant circulant dans la ligne d'alimentation,
Eliminer la composante continue dans la partie du courant prélevé et conserver uniquement la partie alternative sur la plage de fréquence de fonctionnement désiré,
Comparer la valeur de courant alternatif restant à une valeur de courant de référence et générer un signal d'erreur $S_e$,
A partir de ce signal d'erreur $S_e$, générer une nouvelle valeur de tension de consigne, pondérer cette valeur de consigne et la « sommer » à une valeur de consigne de charge de la réserve d'énergie et à une valeur de tension de référence, puis générer une nouvelle valeur de consigne à transmettre au dispositif bidirectionnel.

9. Procédé selon l'une des revendications 7 ou 8 **caractérisé en ce que** l'on filtre des émissions dans les basses fréquences comprises dans la bande [10Hz, 3KHz].

10. Procédé selon l'une des revendications 7 à 9 **caractérisé en ce que** le dispositif bidirectionnel génère une modulation d'impulsion pour commander la charge et/ou la décharge de la réserve d'énergie.

11. Procédé selon l'une des revendications 7 à 10 **caractérisé en ce qu'**il filtre les émissions électromagnétiques et évite l'impact de microcoupures de courant en amont d'un dispositif radio.

**Patentansprüche**

1. Gerät (10) zum Filtern von Emissionen und für Immunität gegen Mikrostromausfälle in einem mit Strom versorgten

EP 3 667 883 B1

Netz, das einer zu schützenden Ausrüstung (30) vorgelagert ist, wobei das Gerät mindestens die folgenden Elemente umfasst:

einen bidirektionalen DC-DC-Wandler-Manager (18), der zum Liefern eines Sollwertes zu den Anschlüssen eines Energiereservekondensators (13) ausgelegt ist,
ein Gerät (12) zum Abnehmen des im Netz fließenden Stroms, das zum Übertragen des abgenommenen Stromwertes an ein Regel- und Kontrollgerät (17) konfiguriert ist,
Gerät (14) zum Abnehmen eines Spannungswertes und zum Übertragen desselben zu einem mit dem Regel- und Kontrollgerät (17) verbundenen Mikroausfall-Detektionsgerät (19),
ein Mittel (16) zum Verhindern einer Spannungswiederkehr im Versorgungsnetz,
wobei das Regel- und Steuergerät (17) mindestens einen ersten Kreis zum Regeln der Gerätespannung (40), einen zweiten Kreis zum Filtern von Stromoberwellen (41) und einen dritten Kreis zum Regeln der Reservespannung (42) umfasst, wobei die Ausgänge der drei Kreise einzeln mit einem Steuergerät (43) verbunden sind, dessen Funktion darin besteht, Signale zu einem bidirektionalen Managementgerät (18) zu erzeugen, um den Wert der an den Anschlüssen der Energiereserve abgenommenen Spannung zu senken oder zu erhöhen, so dass letztere Energie an das Netz liefert oder, im Gegenteil, dem Netz Energie entnimmt, indem sie sich selbst auflädt, **dadurch gekennzeichnet, dass**
das Stromabnahmegerät (12) zum Übertragen dieses abgenommenen Stroms zu einem Bandpassfilter (601) konfiguriert ist, das zum Eliminieren der Gleichstromkomponente des abgenommenen Stroms und zum frequenzmäßigen Begrenzen der Kompensation ausgelegt ist, wobei das Bandpassfilter Folgendes umfasst:

einen Subtrahierer (602), konfiguriert zum Empfangen der verbleibenden Wechselstromkomponente des abgenommenen Stroms und eines gegebenen Referenzstromwertes $I_{ref}$ und ausgelegt zum Erzeugen eines Fehlersignals $S_e$,
ein Korrekturmodul (603), ausgelegt zum Verarbeiten des Fehlersignals $S_e$ und zum Erzeugen eines entsprechenden Spannungswertes $V_{cons}$ und zum Übertragen des Fehlerspannungswertes $V_{cons}$ zu einem Summierer (615), der zum Gewichten des Fehlerspannungswertes $V_{cons}$, eines Referenzspannungswertes und eines Ladespannungswertes der Energiereserve vor deren Übertragung zum bidirektionalen DC-DC-Verwaltungsgerät (18) ausgelegt ist, das zum Erzeugen einer Spannung an den Anschlüssen des Energiereservekondensators ausgelegt ist, so dass der Energiereservekondensator Energie an das Netz liefert oder im Gegenteil dem Netz Energie entnimmt, indem er sich selbst auflädt.

2. Gerät nach Anspruch 1, **dadurch gekennzeichnet, dass** das bidirektionale DC-DC-Gerät (18) zum Erzeugen einer Pulsbreitenmodulation zum Steuern des Ladens und/oder Entladens der Energiereserve konfiguriert ist.

3. Gerät nach Anspruch 1, **dadurch gekennzeichnet, dass** das Versorgungsnetz eine Gleichspannung erzeugt.

4. Gerät nach Anspruch 1, **dadurch gekennzeichnet, dass** das Versorgungsnetz zum Erzeugen einer gleichgerichteten Wechselspannung ausgelegt ist.

5. Gerät nach einem der Ansprüche 1 bis 4, **dadurch gekennzeichnet, dass** es zum Filtern von niederfrequenten Emissionen im Band [10Hz, 3KHz] ausgelegt ist.

6. System, das ein Gerät zum Filtern von Emissionen nach einem der Ansprüche 1 bis 5 aufweist, **dadurch gekennzeichnet, dass** es eine dem Filtergerät (10) nachgeschaltete Funkausrüstung (30) umfasst.

7. Verfahren zum Filtern der geleiteten Emissionen an einer Ausrüstung und zum Regeln der Auswirkungen von Mikrostromausfällen mit dem Gerät nach einem der Ansprüche 1 bis 5, **dadurch gekennzeichnet, dass** es mindestens die folgenden Schritte aufweist:

bei Detektion von Mikrostromausfällen und/oder elektromagnetischen Emissionen Aktivieren eines Regel- und Steuergeräts mit den folgenden Schritten:

- Aktivieren, zum Detektieren von Mikrostromausfällen, eines ersten Spannungsregelkreises (40),
- Aktivieren, zum Filtern elektromagnetischer Emissionen, eines Stromoberwellenfilterkreises (41) und eines Reservespannungsregelkreises (42),

zum Erzeugen von Befehlen zu einem bidirektionalen Gerät (18), konfiguriert zum Senken oder Erhöhen des

10

Spannungswertes an den Anschlüssen einer Energiereserve (13) und zum Steuern von deren Laden oder Entladen in das Versorgungsnetz.

8. Verfahren nach Anspruch 7, **dadurch gekennzeichnet, dass** es die folgenden Schritte aufweist:

Abnehmen eines Teils des in der Versorgungsleitung fließenden Stroms,
Eliminieren der Gleichstromkomponente im abgenommenen Teil des Stroms und Behalten nur des Wechselstromteils über den gewünschten Betriebsfrequenzbereich,
Vergleichen des verbleibenden Wechselstromwertes mit einem Referenzstromwert und Erzeugen eines Fehlersignals $S_e$,
Erzeugen eines neuen Sollspannungswertes auf der Basis dieses Fehlersignals $S_e$, Gewichten dieses Sollwertes und "Summieren" desselben mit einem Ladesollwert der Energiereserve und einem Referenzspannungswert, dann Erzeugen eines neuen Sollwertes zur Übertragung zu dem bidirektionalen Gerät.

9. Verfahren nach einem von Anspruch 7 oder Anspruch 8, **dadurch gekennzeichnet, dass** Emissionen in den Niederfrequenzen im Band [10Hz, 3KHz] gefiltert werden.

10. Verfahren nach einem der Ansprüche 7 bis 9, **dadurch gekennzeichnet, dass** das bidirektionale Gerät eine Pulsmodulation zum Steuern des Ladens und/oder Entladens der Energiereserve erzeugt.

11. Verfahren nach einem der Ansprüche 7 bis 10, **dadurch gekennzeichnet, dass** es die elektromagnetischen Emissionen filtert und die Auswirkungen von Mikrostromausfällen stromaufwärts eines Funkgeräts verhindert.

## Claims

1. Device (10) for filtering emissions and for immunity from current microcuts on a network supplied with current, positioned upstream of an apparatus (30) to be protected, the device comprising at least the following elements:

a bidirectional DC-to-DC conversion manager (18) adapted for delivering a setpoint value to the terminals of an energy reserve capacitor (13);
a device for extracting the current (12) flowing in the network, configured to transmit the extracted current value to a regulating and monitoring device (17);
a device (14) for extracting a voltage value and transmitting it to a device for detecting microcuts (19) which is connected to the regulating and monitoring device (17);
means (16) capable of preventing a voltage recovery back into the supply network,
wherein the regulating and control device (17) comprises at least a first feedback loop for the voltage of the apparatus (40), a second loop for filtering the current harmonics (41) and a third feedback loop (42) for the reserve voltage, the outputs of the three loops being connected individually to a control device (43), the function of which is to generate signals for a bidirectional management device (18) for lowering or raising the value of the voltage at the terminals of the energy reserve so that this reserve delivers energy to the network or, on the contrary, extracts energy from the network by charging itself, **characterized in that**
the device for extracting current (12) is configured so as to transmit this extracted current to a bandpass filter (601) adapted for removing the DC component from the extracted current and to frequency-limit the compensation, said bandpass filter comprising:

a subtractor (602) configured to receive the remaining AC component of the extracted current and a given reference current value $I_{ref}$, and adapted for generating an error signal $S_e$,
a correction module (603) adapted for processing the error signal $S_e$ and for generating a corresponding voltage value $V_{cons}$, and for transmitting the error voltage value $V_{cons}$ to a summer (615) adapted for weighting the error voltage value $V_{cons}$, a reference voltage value and a charging voltage value for the energy reserve before transmitting them to the bidirectional DC-to-DC management device (18) adapted for generating a voltage at the terminals of the energy reserve capacitor so that this reserve capacitor delivers energy to the network or, on the contrary, extracts energy from the network by charging itself.

2. Device according to claim 1, **characterized in that** the bidirectional DC-to-DC device (18) is configured to generate a pulse width modulation to control the charging and/or the discharging of the energy reserve.

**3.** Device according to claim 1, **characterized in that** the power supply network generates a DC voltage.

**4.** Device according to claim 1, **characterized in that** the power supply network is adapted to generate a rectified AC voltage.

**5.** Device according to one of claims 1 to 4, **characterized in that** it is adapted to filter low-frequency emissions in the band [10 Hz, 3 kHz].

**6.** System having a device for filtering emissions according to one of claims 1 to 5, **characterized in that** it comprises a radio apparatus (30) located downstream of the filtering device (10).

**7.** Method for filtering the conducted emissions at an apparatus and managing the impact of the microcuts by using the device according to one of claims 1 to 5, **characterized in that** it has at least the following steps:

in the event of detection of microcuts and/or electromagnetic emissions, activating a regulating and monitoring device with the following steps:

- to detect microcuts, activating a first voltage feedback loop (40);
- to filter the electromagnetic emissions, activating a loop for filtering the current harmonics (41) and a feedback loop (42) for a reserve voltage;

in order to generate commands to a bidirectional device (18) configured to lower or to raise the voltage value at the terminals of an energy reserve (13) and to control its charging or its discharging in the supply network.

**8.** Method according to claim 7, **characterized in that** it has the following steps:

extracting a portion of the current flowing through the supply line,
removing the DC component in the extracted current portion and retaining only the AC portion over the desired operating frequency range,
comparing the remaining AC current value with a reference current value and generating an error signal $S_e$,
on the basis of this error signal $S_e$, generating a new setpoint voltage value, weighting this setpoint value and "summing" it with a charging setpoint value for the energy reserve and with a reference voltage value, then generating a new setpoint value to be transmitted to the bidirectional device.

**9.** Method according to one of claims 7 or 8, **characterized in that** emissions are filtered at low frequencies within the band [10 Hz, 3 kHz].

**10.** Method according to one of claims 7 to 9, **characterized in that** the bidirectional device generates a pulse modulation to control the charging and/or the discharging of the energy reserve.

**11.** Method according to one of claims 7 to 10, **characterized in that** it filters the electromagnetic emissions and avoids the impact of current microcuts upstream of a radio device.

[Fig. 1]

[Fig. 2]

[Fig. 3]

[Fig. 4A]

[Fig. 4B]

[Fig. 5A]

[Fig. 5B]

[Fig. 6]

[Fig. 7]

[Fig. 8]

**EP 3 667 883 B1**

## RÉFÉRENCES CITÉES DANS LA DESCRIPTION

**Documents brevets cités dans la description**

- US 7899415 B

- US 20130221943 A